(19) Europäisches Patentamt
European Patent Office
Office européen des brevets

(11) Numéro de publication : **0 618 276 A1**

(12) # DEMANDE DE BREVET EUROPEEN

(21) Numéro de dépôt : **94870056.2**

(22) Date de dépôt : **29.03.94**

(51) Int. Cl.[5] : **C09D 4/00,** C09D 5/44, C25D 13/08, H01B 1/12

(30) Priorité : **01.04.93 BE 9300322**

(43) Date de publication de la demande : **05.10.94 Bulletin 94/40**

(84) Etats contractants désignés : **AT BE CH DE DK ES FR GB GR IT LI LU NL PT SE**

(71) Demandeur : **RECHERCHES ET DEVELOPPEMENT DU GROUPE COCKERILL SAMBRE, en abrégé: RD-CS**
**Quai d'Ougnée,**
**Ougrée**
**B-4000 Liège (BE)**

(72) Inventeur : **Mertens, Marc**
**rue Cockerill 31**
**B-4900 Spa (BE)**
Inventeur : **Martinot, Lucien**
**rue Hansez 25**
**B-4877 Olne (BE)**
Inventeur : **Calberg, Cedric**
**boulevard Piercot 8**
**B-4000 Liège (BE)**
Inventeur : **Jerome, Robert**
**rue des Sorbiers 6**
**B-4130 Tilff (BE)**
Inventeur : **Schrijnemackers, Jean**
**rue de Bleurmont 15**
**B-4053 Embourg (BE)**

(74) Mandataire : **Callewaert, Jean et al**
**GEVERS Patents,**
**rue de Livourne 7,**
**Boîte Postale 1**
**B-1050 Bruxelles (BE)**

(54) **Procédé de dépôt par électropolymérisation d'un film d'un matériau composite sur une surface conductrice d'électricité.**

(57) L'invention est relative à un procédé de dépôt par électropolymérisation d'un film d'un matériau composite sur une surface conductrice d'électricité suivant lequel on fait usage d'un mélange comprenant (a) un monomère, (b) une substance formant un agent dopant, (c) un électrolyte-support et (d) un solvant, on soumet ce mélange à une électrolyse et on polarise la cathode ou anode à un potentiel situé dans la zone correspondant au transfert électronique entre la surface métallique et le monomère. On forme à partir du mélange précité, avant l'électrolyse, une solution dans laquelle la substance susdite est présente soit à l'état d'anion, de cation, de molécule, de préférence de molécule organique, et/ou de complexe non dissocié en ions.

EP 0 618 276 A1

La présente invention est relative à un procédé de dépôt par électropolymérisation d'un film d'un matériau composite sur une surface conductrice d'électricité suivant lequel on fait usage d'un mélange comprenant (a) un monomère pouvant former un polymère sur cette surface (b) une substance formant un agent dopant pouvant être incorporée dans ce polymère, (c) un électrolyte-support et (d) un solvant, on soumet ce mélange à une électrolyse en utilisant comme cathode ou comme anode la surface conductrice à revêtir et on polarise cette cathode ou anode à un potentiel situé dans la zone correspondant au transfert électronique entre la surface métallique et le monomère mais respectivement moins négatif ou moins positif que la réaction du solvant, pour autant que le monomère ne soit pas le solvant, ou de l'électrolyte support dans le cas où la surface susdite est utilisée comme cathode ou comme anode.

Dans certains des procédés de dépôt par électropolymérisation pour former un film d'un matériau composite sur une surface conductrice d'électricité connus jusqu'à présent, l'agent dopant est constitué d'une charge inerte qui est mise en suspension mécaniquement dans le bain d'électrolyse. Cet agent dopant est alors emprisonné dans la matrice en cours de formation et est codéposé sans avoir réagi électrochimiquement sur ladite surface conductrice d'électricité. Ainsi, il est possible d'incorporer par exemple de l'oxyde de titane dans des films de polypyrrole sur une surface conductrice d'électricité.

Dans le vaste domaine des polymères conducteurs, le terme dopant est fréquemment utilisé mais il ne signifie pas obligatoirement une espèce incorporée suite à un phénomène rédox mais bien un contre-ion du polymère conducteur indispensable pour assurer l'électoneutralité du dépôt sous sa forme conductrice. Plusieurs systèmes décrivent par ailleurs l'utilisation de l'agent dopant comme électrolyte support.

Dans d'autres procédés connus l'agent dopant est formé par une substance active, notamment au niveau rédox, et est fixé préalablement sur le monomère. Ainsi, le film formé possède une entité chimiquement liée qui en modifie les propriétés.

Un exemple d'application de ce dernier procédé est la modification de monomères précurseurs de polymères conducteurs, tels que pyrrole, thiophène, par réaction avec des groupements divers comme le ferrocène, des étheroxydes, des alkyles, possédant une activité dans des domaines aussi différents que l'oxydoréduction, la complexation, la conductivité.

Ces procédés connus présentent différents inconvénients.

En effet, lorsqu'on fait usage, comme agent dopant, d'une substance inerte mise en suspension dans le bain d'électrolyse, surtout pour des films relativement minces, des problèmes peuvent se poser du point de vue homogénéité du film formé sur la surface conductrice d'électricité.

Si on fait usage d'un procédé dans lequel l'agent dopant est formé par une substance active, le monomère doit être modifié chimiquement. Il s'agit d'une opération qui n'est pas réalisable sur tous les monomères ce qui limite considérablement le domaine d'application de ce procédé.

Un des buts essentiels de la présente invention est de proposer un nouveau procédé pour la formation d'un film de matériau composite sur une surface conductrice d'électricité par électropolymérisation, ce qui permet de remédier aux inconvénients précités des procédés connus cités ci-dessus.

A cet effet, suivant l'invention l'on forme, à partir du mélange précité comprenant le monomère, l'agent dopant, l'électrolyte-support et le solvant, avant l'électrolyse, une solution dans laquelle l'agent dopant est présent à l'état d'anion, de cation, de molécule , et/ou d'un complexe non dissocié en ions et éventuellement organisé autour d'un cation. Il s'agit plus particulièrement de molécules et complexes organiques solubles dans le solvant utilisé.

Plus particulièrement, le procédé, suivant l'invention, visant essentiellement la réalisation d'un film composite sur des métaux usuels susceptibles de subir un phénomène de dissolution anodique en milieu organique, semble mieux adapté à la réalisation de films polymères en régime cathodique. C'est ainsi que, suivant l'invention, l'on utilise de préférence un monomère précurseur d'un polymère non conducteur.

Avantageusement, on fait usage d'un solvant aprotique.

Suivant une forme de réalisation particulière de l'invention, on fait usage d'un monomère qui lui-même fait office de solvant et qui est capable d'assurer la solubilité de l'électrolyte-support.

D'autres détails et particularités de l'invention ressortiront de la description donnée ci-après, à titre d'exemples non limitatifs, de plusieurs formes de réalisation concrètes du procédé suivant l'invention avec référence aux graphiques annexés.

La figure 1 représente un voltampérogramme pour un mélange contenant comme agent dopant le ferrocène, comme électrolyte-support le $Et_4NClO_4$ et comme solvant l'acétonitrile.

La figure 2 représente un voltampérogramme pour un mélange contenant de la benzoquinone comme agent dopant dans une solution de $CH_3CN$ et d'$Et_4NClO_4$.

La figure 3 représente un voltampérogramme pour un mélange de $Cs_2UCl_6$ dans du $CH_3CN$ avec comme électrolyte-support le $Et_4NClO_4$.

La figure 4 représente un voltampérogramme pour un mélange de $Cs_2UO_2Cl_4$ dans du $CH_3CN$.

La figure 5 est une vue schématique en élévation d'une cellule électrochimique permettant la mise en oeuvre du procédé suivant l'invention dans laquelle les électrodes ont été omises.

La figure 6 est une vue d'en haut de cette même cellule.

La figure 7 est une copie partielle verticale, à plus grande échelle, de deux des électrodes montées dans la cellule suivant les figures 5 et 6.

Dans les différentes figures les mêmes chiffres de référence se rapportent aux mêmes éléments.

D'une façon générale, dans le procédé de dépôt par électropolymérisation suivant l'invention, pour former un film d'un matériau composite sur une surface conductrice d'électricité, on fait usage d'un mélange comprenant : (a) un monomère pouvant former un polymère sur cette surface, (b) une substance formant un agent dopant pouvant être incorporée dans ce polymère, (c) un électrolyte-support et (d) un solvant.

Ce mélange est soumis à une électrolyse en utilisant comme cathode ou comme anode la surface conductrice à revêtir. Cette cathode ou anode est polarisée à un potentiel situé dans la zone correspondant au transfert électronique entre la surface métallique et le monomère, mais respectivement moins négatif ou moins positif que la réaction du solvant ou de l'électrolyte support dans le cas où la surface susdite est utilisée comme cathode ou comme anode.

La caractéristique essentielle de ce procédé est que l'on forme à partir du mélange précité, avant de le soumettre à l'électrolyse, une solution dans laquelle l'agent dopant est présent à l'état d'anion, de cation, de molécule ou de complexe non dissocié en ions et éventuellement organisé autour d'un cation minéral. Dans le cas d'une molécule ou d'un complexe ceux-ci sont de préférence constitués d'un composé organique.

Le solvant peut soit être un composé aprotique, soit être formé par le monomère lui-même, soit encore être une combinaison des deux.

L'électrolyte utilisé doit être soluble dans le solvant choisi et la concentration doit être suffisante pour obtenir une conductivité suffisamment importante dans une cellule d'électrolyse où est introduit le mélange précité pour effectuer le dépôt par électropolymérisation. Il s'est avéré que cette conductivité peut généralement être égale ou supérieure à $10^{-4}\Omega^{-1}cm^{-1}$. De bons résultats ont été obtenus avec une concentration située entre $10^{-3}$ et 5 M, alors qu'une préférence est donnée à une concentration comprise entre $5.10^{-2}$ M et $5.10^{-1}$ M.

En général, l'électrolyte-support peut être constitué par un perchlorate, un tosylate, un tétrafluoroborate, un hexafluorophosphate, un halogénure d'ammonium quaternaire de formule :

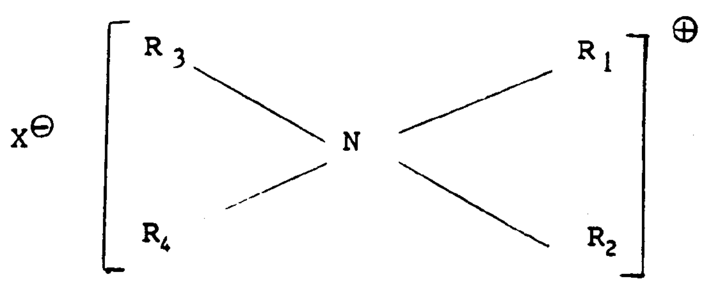

dans laquelle $X^-$ représente $ClO_4^-$, $BF_4^-$, $PF_6^-$, $OTos^-$, $Cl^-$, $Br^-$, ... et dans laquelle les radicaux $R_1$, $R_2$, $R_3$ et $R_4$, qui sont identiques ou différents, sont des hydrogènes, des radicaux alkyles en $C_1$ à $C_6$ ou aryles.

Pour ce qui concerne le monomère, sa concentration dans le bain d'électrolyse doit être suffisante pour obtenir l'homogénéité, l'épaisseur et l'adhésion requise. Cette concentration est généralement maintenue entre $10^{-2}$ M et 10 M. Une préférence est donnée pour une concentration du monomère comprise entre $5.10^{-2}$ M et 2 M sauf dans le cas où le monomère lui-même constitue le solvant. Ce monomère peut par exemple être du type vinylique ou cyclique. Plus particulièrement, il peut s'agir d'une molécule organique comportant une liaison éthylénique terminale conjugée avec un groupement électro-attracteur et capable de donner lieu à une réduction par transfert électronique direct à la cathode. Plus spécifiquement, le monomère peut être constitué d'acrylonitrile, d'acroléine, ou éventuellement d'acrylamide de 2-vinylpyridine, de 4-vinylpyridine ou n-vinylpyrolidone.

La concentration maximale de l'agent dopant est fixée soit par sa limite de solubilité dans le bain d'électrolyse, soit par son action dégradante sur la couche de polymère.

Suivant l'invention, cet agent dopant à incorporer dans le film polymère à former sur une surface conductrice d'électricité est dès le départ présent dans le bain d'électrolyse sous la forme d'ions totalement dissociés ou de molécules neutres.

Plus concrètement, la concentration de l'agent dopant dans le bain d'électrolyse est généralement inférieure à celle du monomère et se situe dans la plupart des cas entre $10^{-7}$ M et 5 M. Une préférence est donnée pour des concentrations situées entre $10^{-6}$ M et $10^{-1}$ M.

Comme déjà indiqué ci-dessus, la nature des agents dopants peut être très variée. Ainsi, cet agent peut être constitué par des composés inorganiques ou organiques pouvant se présenter sous forme de complexes et/ou présenter une activité radioactive. Comme composés inorganiques on peut citer: $TiCl_4$, $CuBr_2$, $Fe(Ac)_2$, $NiBr_2(P\Phi_3)_2$, $AgNO_3$, $AlCl_3$, $FeCl_3$, $MoCl_3$, $MoCl_5$, $MnBr_2$, $CrCl_3$, $WCl_6$, $VCl_3$, $MgCl_2$, $PbCl_2$, $MoBr_3$, $MoBr_4$, $TiCl_3$.

Comme composés organiques on peut citer des amides et des quinones et comme composés complexes le ferrocène et des métaux carbonyles.

Enfin, comme composés radioactifs on peut citer : $Cs_2UCl_6$, $Cs_2UO_2Cl_4$, $Cs_2NpCl_6$, $Cs_2PuCl_6$.

En fait, les substances à incorporér dans le film polymère sont caractérisées par leur premier potentiel rédox qui doit être respectivement moins négatif ou moins positif que le potentiel de réaction cathodique ou anodique du solvant ou l'électrolyte-support contenu dans le bain électrolytique.

Suivant les cas envisagés, l'agent dopant réagira à un potentiel :

a) moins cathodique (ou anodique) que le potentiel de réaction du monomère pour former le polymère ;

b) égal au potentiel de réaction du monomère ;

c) plus cathodique (ou anodique) que le potentiel du monomère mais tout en se situant avant la réaction cathodique (ou anodique) du solvant ou de l'électrolyte-support.

Le procédé suivant l'invention est donc applicable lorsque, dans le bain d'électrolyse, l'agent dopant se présentant sous forme d'ion est déchargé complètement ou partiellement à l'électrode où il est déposé.

On peut ainsi citer les exemples suivants :

l'incorporation d'aluminium au départ de $AlCl_3$ basé sur la réaction électrochimique suivante : $Al^{3+} + 3e^- \rightarrow Al^0$;

l'incorporation de plomb ou de magnésium métallique au départ de $PbCl_2$ ou de $MgCl_2$ ($Pb^{2+} + 2e^- \rightarrow Pb^0$;$Mg^{2+} + 2e^- \rightarrow Mg^0$);

l'incorporation de titane métallique au départ de $TiBr_4$ ou de $TiCl_3$ ($Ti^{4+} + 4\ e^- \rightarrow Ti^0$; $Ti^{3+} + 3\ e^- \rightarrow Ti^0$);

l'incorporation de fer métallique au départ de $FeCl_2$, $FeBr_3$ ou $FeCl_3$ ($Fe^{2+} + 2\ e^- \rightarrow Fe^0$; $Fe^{3+} + 3\ e^- \rightarrow Fe^0$);

l'incorporation de molybdène métallique au départ de $MoCl_3$, $MoBr_3$ ou $MoBr_4$ ($Mo^{3+} + 3\ e^- \rightarrow Mo^0$;$Mo^{4+} + 4\ e^- \rightarrow Mo^0$);

Incorporation de manganèse métallique au départ de $MnCl_2$($Mn^{2+} + 2\ e^- \rightarrow Mn^0$).

Le procédé suivant l'invention convient également tout particulièrement pour la préparation de couches minces d'émetteurs $\alpha$, basées par exemple sur l'incorporation d'éléments actinides.

Comme exemples on peut citer les réactions électrochimiques suivantes :

$U^{3+} + 3\ e^- \rightarrow U^0$; $U^{4+} + e^- \rightarrow U^{3+}$; $UO_2^{2+} + e^- \rightarrow UO_2^{+}$; $Np^{3+} + 3\ e^- \rightarrow Np^0$.

Comme déjà signalé ci-dessus, en fonction de la nature du bain d'électrolyse, il est possible d'utiliser comme cathode ou comme anode la surface conductrice de l'électricité à revêtir. Cette surface peut par exemple être métallique ou être formée de graphite ou encore d'une électrode ITO.

En polarisant cette cathode ou anode à un potentiel situé dans la zone correspondant au transfert électronique entre l'électrode considérée et le monomère, mais respectivement moins négatif ou moins positif que la réaction du solvant ou de l'électrolyte-support dans le cas où la surface conductrice à revêtir est utilisée comme cathode ou comme anode et respectivement plus négatif ou plus positif que le premier potentiel de réaction de l'agent dopant selon que cette surface est utilisée comme cathode ou comme anode. La valeur du potentiel d'électrolyse dépend évidemment de la nature du solvant, du monomère et de l'agent dopant. Cette valeur est déterminée après analyse des courbes électrochimiques obtenues par voltampérométrie. En pratique, la plage de potentiel compatible avec le procédé suivant l'invention comprend tous les potentiels où le monomère et l'agent dopant subissent un transfert électronique impliquant la surface à recouvrir, mais inférieurs en valeur absolue au potentiel de réaction du solvant ou de l'électrolyte support.

Dans le cas où la réaction d'oxydoréduction de l'agent dopant dans le bain électrolytique précède celle de monomère, la plage du potentiel compatible est délimitée par le potentiel de transfert électronique du monomère et par le potentiel de réaction du solvant.

Par ailleurs, dans le cas où la réaction d'oxydoréduction du dopant suit celle du monomère, la plage de potentiel compatible est délimitée par le potentiel de transfert électronique de l'agent dopant et par le potentiel de réaction du solvant.

Les figures 5 à 7 concernent une cellule électrochimique, connue en soi, permettant la mise en oeuvre du procédé suivant l'invention. Cette cellule comprend une enceinte fermée 1 contenant une solution 2 formée du solvant, du monomère, de l'électrolyte-support et de l'agent dopant. Dans le fond de cette enceinte 1 est prévu un barreau magnétique 23 tournant autour d'un axe vertical pour assurer ainsi l'homogénéité de la solution 2.

La partie supérieure de cette enceinte présente un robinet 3 permettant de maintenir au-dessus de la solution 2 une atmosphère inerte d'azote 2' et quatre logements coniques rodés intérieurement 4, 5, 6 et 7 dans lesquels sont suspendues des électrodes, notamment une électrode centrale de travail 8, deux contre-électrodes 9 et 10 situées de part et d'autre de l'électrode de travail 8 et une électrode de référence 9.

Ces électrodes ont été montrées plus en détail à la figure 7. L'électrode de travail 8 comprend à son extrémité libre inférieure une plaque de métal 10 à recouvrir présentant par exemple une largeur de 1 cm et une hauteur de 2 cm. Cette plaque 10 est suspendue par une pince 11 à un conducteur 12 qui s'étend à l'intérieur, dans l'axe, d'un manchon en verre 13, dont l'ouverture supérieure 14 est fermée par un bouchon de colle époxy 15. Le manchon 13 présente une paroi extérieure conique rodée 16 s'adaptant d'une manière sensiblement étanche dans le logement 6 de l'enceinte 1.

L'électrode de référence 7 et les contre-électrodes 9 et 10 sont de la même construction et comprennent une feuille en platine enroulée sous forme de cylindre 17 présentant une surface de l'ordre de 10 $cm^2$. Ce cylindre 17 est suspendu à un conducteur 18 s'étendant dans l'axe d'un manchon en verre 19 fermé à son extrémité supérieure 20 par un bouchon d'une colle époxy 21.

Comme pour l'électrode 8, les électrodes 4, 5 et 7 présentent une paroi extérieure conique 22 s'adaptant d'une manière étanche dans les logements correspondants 4, 5 et 6 de l'enceinte 1.

Afin de permettre d'illustrer davantage l'objet de la présente invention ci-après seront donnés des exemples concrets d'application.

Exemple 1

Cet exemple concerne l'utilisation d'un agent dopant qui est caractérisé par un transfert électronique impliquant l'état fondamental. Dans le présent exemple cet agent dopant est formé d'$AlCl_3$.

Le bain d'électrolyse a été préparé sur base des constituants suivants :

- 150 ml de $CH_3CN$ (Janssen, P.A.) : séché sur hydrure calcique ($CaH_2$) pendant 48 h
- 1,9 gr de $Et_4NClO_4$ (Fluka,> 99 %) : séché sous vide (P = $10^{-2}$ mb) à 80° pendant 24 h
- 5 ml de $CH_2$=CHCN (Aldrich,99 %) : séché sur $CaH_2$ pendant 48 h
- 20 mg de $AlCl_3$ anhydre (Alfa Products).

Par rapport à une pseudo référence en platine plongeant dans le bain d'électrolyse, la réduction du trichlorure d'aluminium sur une électrode de nickel a eu lieu à un potentiel de -1,1 V, moins cathodique que celui du pic de polymérisation de l'acrylonitrile (-2,1 V) étudié dans les mêmes conditions expérimentales.

Le dépôt du film composite a été obtenu par application d'un potentiel de -2,4 V pendant 30 secondes.

La caractérisation de l'échantillon par fluorescence X a mis en évidence la présence de l'aluminium et l'absence d'ion chlorure dans le film. D'autres films ont été obtenus avec d'autres conditions expérimentales.

| [$AlCl_3$] (M) | Potentiel d'électrolyse (V) | Durée (S) |
|---|---|---|
| 5 $10^{-3}$ M | -2,4 V | 30S |
| $10^{-2}$ M | -2,5 V | 10S |

Exemple 2

Dans cet exemple l'agent dopant, qui est constitué de $FeCl_3$, est caractérisé par un transfert électronique n'impliquant pas l'état fondamental.

Le bain d'électrolyse a été préparé sur base des constituants suivants :

- 150 ml de $CH_3CN$ (Janssen, P.A.) : séché sur $CaH_2$ pendant 48 h
- 1,9 gr de $Et_4NClO_4$ (Fluka,> 99 %) : séché sous vide à 80° pendant 24 h
- 5 ml de $CH_2$=CHCN (Aldrich, 99 %) : séché sur $CaH_2$ pendant 48 h
- 24 mg de $FeCl_3$ anhydre (Alfa Products)

Par rapport à une pseudo référence de platine plongeant dans le bain d'électrolyse, la réduction du chlorure ferrique en fer" a eu lieu à peu près 1 V avant le pic de polymérisation de l'acrylonitrile.

L'obtention du film composite a été réalisée par application d'un potentiel de -2,25 V pendant 25 secondes sur une électrode de Cu.

La caractérisation de l'échantillon par rayons X (EDAX) a mis en évidence la présence de Fe et de chlore dans le film avec un rapport proche de 0,5.

Exemple 3

Dans cet exemple, le ferrocène a été utilisé comme agent dopant et a subi un transfert électronique dans le domaine de potentiel cité tel que sa structure chimique reste identique.

L'électrolyse a été réalisé dans un bain formé par les constituants suivants :
- 150 ml de $CH_3CN$ (Janssen, P.A.) : séché sur $CaH_2$ pendant 48 h
- 4 gr de $Et_4NClO_4$ (fluka,> 99 %) : séché sous vide à 80° pendant 24 h
- 8 ml de $CH_2$=CHCN (Aldrich,99 %) : séché sur $CaH_2$ pendant 48 h
- 0,1 gr de ferrocène (Janssen).

Dans un milieu oxydant (présence d'ions perchlorate), l'ion $Fe^{II}$ du ferrocène est oxydé en $Fe^{III}$. La vague de réduction du Fe correspondant à la réaction $Fe^{III} + 1\ e^- \rightarrow Fe^{II}$ a été observée sur un voltampérogramme enregistré à 50 mV/s (figure 1) à un potentiel de +0,4 V sur une électrode de platine par rapport à une pseudo référence de platine plongeant dans le bain d'électrolyse.

Le film composite a été obtenu en appliquant un potentiel de -2,35 V sur une électrode de nickel pendant 20 secondes. La caractérisation de l'échantillon par infrarouge a mis en évidence les signaux caractéristiques des noyaux cyclopentadiènyles. La présence du Fe a été certifiée par EDAX.

Exemple 4

Dans cet exemple l'agent dopant est formé de 1,4 benzoquinone et a subi une modification de sa structure chimique après le transfert électronique.

L'électrolyse a été réalisée dans un bain formé des constituants suivants :
- 150 ml de $CH_3CN$ (Janssen, P.A.) : séché sur $CaH_2$ pendant 48 h
- 2,6 gr de $Bu_4NClO_4$ (Alfa Products) : séché sous vide à 80° pendant 24 h
- 10 ml de $CH_2$ = CHCN (Aldrich , 99 %) : séché sur $CaH_2$ pendant 48 h
- 25 mg de 1,4 benzoquinone (Janssen, > 99 %) purifiée par sublimation .

La réduction de la 1,4 benzoquinone dans l'acétonitrile s'est faite en 2 étapes, notamment à des potentiels respectifs de -0,65 V et de -1,8 V par rapport à une pseudo référence de platine plongeant dans le bain d'électrolyse (figure 2).

Un film composite homogène a été déposé par chronoampérométrie à un potentiel de -2,3 V pendant 20 secondes. La présence de noyaux benzèniques a été mise en évidence par I.R. (infrarouge).

Exemple 5

Dans cet exemple on a fait usage d'un agent dopant radioactif formé de $Cs_2UCl_6$. Cet agent dopant est caractérisé par un transfert électronique impliquant l'état fondamental.

Cet agent dopant particulier a été synthétisé à partir d'uranium naturel en tournures. La prise d'uranium métal était de 5,37 g. Celui-ci a d'abord été nettoyé au chloroforme pour enlever les matières organiques qui le recouvraient (huile), décapé avec 60 ml de $HNO_3$ et rincé à l'eau désionisée. La masse restante après décapage était de 4,6654 g soit 1,96. $10^{-2}$ Mol. Le principe de la synthèse est :

$$U(c) + 4\ HCl(soln) \text{ -----> } UCl_4\ (soln) + 2\ H_2\ (g)$$

$$U(c) + 4\ HCl(soln) \longrightarrow UCl_4\ (soln) + 2\ H_2\ (g)$$

$$UCl_4\ (soln) + 2\ CsCl\ (soln) \xrightarrow[\text{Hcl}]{} Cs_2UCl_6\ (c)$$

L'uranium a été attaqué avec 70 ml de HCl concentré; la réaction étant très vive, il a fallu ajouter le HCl lentement. La solution s'est colorée momentanément en violet, coloration due à la formation intermédiaire de $UCl_3$. Après adjonction d'eau, la solution avait un volume de 240 ml. Celle-ci était verte et contenait un précipité noir. Après centrifugation, le liquide a été prélevé puis ajouté à une solution de CsCl (en quantité stoechiométrique). $CsUCl_6$ a été précipité en saturant lentement la solution par de l'acide chlorhydrique gazeux. La solution a à nouveau été centrifugée et le précipité vert de $Cs_2UCl_6$ a été recueilli. Il a été lavé avec HCl concentré puis séché avec l'alcool éthylique et l'éther sulfurique. Enfin, le précipité a été séché sous une lampe à infrarouge puis mis dans un dessiccateur. On a ainsi recueilli 10,0386 g de $Cs_2UCl_6$ ce qui a donné un rendement pratique de 71,5 % par la formule :

$$Rdt = 100\ \frac{m(Cs_2UCl_6)\ M(U)}{M(Cs_2UCl_6)\ m(U)}$$

avec

M(U) = 238,029 g/mol

$M(Cs_2UCl_6)$ = 716,557 g/mol
$m(Cs_2UCl_6)$ = 10,0386 g
m(U) = 4,6654 g.

En prenant un spectre UV - visible de $Cs_2UCl_6$ en solution dans $HClO_4$ et, par comparaison avec celui d'une solution faite à partir d'un échantillon pur de $Cs_2UCl_6$, la présence d'uranium tétravalent en solution a été confirmée.

Un diagramme de rayons X (méthode des poudres) de l'échantillon obtenu s'est révélé totalement identique à un diagramme de référence de $Cs_2UCl_6$ pur.

Le titrage potentiométrique des ions chlorures a indiqué une pureté de 99,5 %.

Une électrolyse a ensuite été réalisée dans un bain électrolytique comprenant les constituants suivants :

- 150 ml de $CH_3CN$ (Janssen,P.A.) : séché sur $CaH_2$ pendant 48 h
- 2,9 gr de $Bu_4NPF_6$ (Fluka, P.A.) : séché sous vide à 80° pendant 24 h
- 5 ml de $CH_2$=CHCN (Aldrich,99 %) : séché sur $CaH_2$ pendant 48 h
- 0,54 gr de $Cs_2UCl_6$ synthétisé commé décrit ci-dessus.

La réduction de $Cs_2UCl_6$ dans l'acétonitrile a eu lieu en deux étapes, notamment à des potentiels respectifs de -0,4 V ($U^{IV} + 1\ e^- \rightarrow U^{III}$) et de -1,5 V ($U^{III} + 3\ e^- \rightarrow U°$) par rapport à une pseudo référence de platine plongeant dans le bain d'électrolyse (figure 3).

Un film homogène a été déposé en appliquant un potentiel de -2,25 V pendant 30 secondes.

La stabilité dans le temps du film a été évaluée par mesures du rayonnement $\alpha$ répétées sur la même électrode et des autoradiographies ont montré la formation d'un film composite régulier et homogène sur la surface métallique de zinc.

<u>Exemple 6</u>

Dans cet exemple on a également fait usage d'un agent dopant radioactif mais qui est caractérisé par un potentiel n'impliquant pas l'état fondamental. Il s'agit de l'agent dopant présentant la formule chimique suivante :$Cs_2UO_2Cl_4$.

Cet agent dopant a été synthétisé de la manière suivante : on a dissout d'abord du CsCl dans un minimum d'HCl 1N (environ 20 % d'excès par rapport à la stoéchiométrie) et ensuite du $UO_2(NO_3)_2$. $6H_2O$ dans HCl 2N, refroidi à 0°C dans un bain de glace. Les deux solutions préparées ont été mélangées et le $Cs_2UO_2Cl_4$ a précipité immédiatement. Après filtration, le précipité a été lavé à deux reprises et à froid par HCl 12N. On a alors redissout le précipité dans le minimum d'HCl et on l'a reprécipité à froid par HCl 12N. Le produit a été filtré et lavé toujours à froid par HCl 12 N, puis par l'éthanol et l'éther sulfurique. Il a finalement été séché sous vide à 80°C pendant 12 heures; il se présentait sous la forme d'une poudre jaune de $Cs_2UO_2Cl_4$. Le rendement obtenu était de 42,5 % et le diagramme de R.X. du produit synthétisé était identique à celui du $Cs_2UO_2Cl_4$ de référence.

Un bain d'électrolyse a ensuite été préparé sur base des constituants suivants :

- 150 ml de $CH_3CN$ (Janssen, P.A.) : séché sur $CaH_2$ pendant 48 h
- 1,9 gr de $Et_4NClO_4$ (Fluka,> 99 %) : séché sous vide à 80° pendant 24 h
- 5 ml de $CH_2$=CHCN (Aldrich,99 %) : séché sur $CaH_2$ pendant 48 h
- 0,51 gr de $Cs_2UO_2Cl_4$ synthétisé comme ci-dessus.

La réduction de $Cs_2UO_2Cl_4$ dans l'acétonitrile a lieu en une étape ($UO_2^{2+} + 1\ e^- \rightarrow UO_2^{+}$) à un potentiel de -0,8 V sur une électrode de Pt par rapport à une pseudo référence de platine plongeant dans le bain d'électrolyse (figure 4).

Un film homogène a été obtenu en appliquant un potentiel de -2,2 V pendant 15 secondes. La stabilité du film a été évaluée par comptage $\alpha$ après de nombreux rinçages avec un solvant du polymère. Les autoradiographies ont montré un recouvrement régulier et homogène des électrodes de nickel.

<u>Exemple 7</u>

Dans cet exemple particulier le solvant est formé par le monomère même, tandis que l'agent dopant est constitué d'$AlCl_3$.

L'électropolymérisation a été réalisée dans un bain d'électrolyse comprenant les constituants suivants :

- 150 ml de $CH_2$=CHCN (Aldrich 99 %) séché sur $CaH_2$ pendant 48 h
- 1,9 gr de $Et_4NClO_4$ (Fluka,> 99 %) séché sous vide à 80° pendant 24 h
- 20 mg de $AlCl_3$ anhydre (Alfa Products).

Dans ces conditions, un film homogène, mais plus mince que le même échantillon préparé en présence d'acétonitrile, a été obtenu en appliquant un potentiel de -2,5 V pendant 10 secondes sur une électrode de

nickel.

La caractérisation de l'échantillon par fluorescence X a mis en évidence la présence d'aluminium dans le film.

De ce qui précède il résulte que, comparé au procédé connu, dont question dans l'introduction de la description et faisant usage d'une charge neutre, dans le procédé suivant l'invention, on obtient une distribution parfaitement régulière sur l'électrode où le dépôt de polymérisation a lieu, contrairement à ce qui est le cas dans ce procédé connu.

En effet, dans le procédé suivant l'invention, l'incorporation de l'agent dopant dans le polymère se fait à une échelle correspondant à la distribution ionique ou moléculaire dans la double couche électrochimique puisqu'il est admis qu'un ion, qu'un atome, par exemple dans le cas où l'ion est complètement déchargé, ou qu'une molécule soit emprisonnée dans le polymère en croissance. La distribution de l'agent dopant sur la surface conductrice de l'électrode suit ainsi la répartition des substances présentes dans la couche de diffusion.

Par ailleurs, par rapport au procédé où le monomère doit être modifié chimiquement, le procédé suivant l'invention présente le grand avantage de pouvoir utiliser tel quel un monomère quelconque qui doit simplement répondre aux conditions requises pour l'électropolymérisation en milieu aprotique. La variété des monomères pouvant être utilisée est donc beaucoup plus étendue que dans le cas du procédé où le monomère nécessite préalablement une modification chimique.

Dans le procédé suivant l'invention, comme d'ailleurs dans la plupart des procédés connus, il est généralement important que la teneur en eau du bain d'électrolyse soit inférieure à $10^{-3}$ M par litre.

L'invention n'est bien entendu pas limitée aux différentes formes de réalisation concrète décrites ci-dessus du procédé d'électropolymérisation suivant l'invention mais il doit être entendu que différentes variantes peuvent être envisagées sans sortir du cadre de l'invention.

C'est ainsi par exemple que d'autres électrolytes-supports que ceux explicitement mentionnés ci-dessus peuvent être utilisés dans le bain d'électrolyse du procédé suivant l'invention. Ainsi, cet électrolyte-support peut contenir des perchlorates, des tosylates, des hexafluorophosphates, des tétrafluoroborates etc...

Il en est de même pour l'agent dopant et le monomère.

## Revendications

1. Procédé de dépôt par électropolymérisation d'un film d'un matériau composite sur une surface conductrice d'électricité suivant lequel on fait usage d'un mélange comprenant (a) un monomère pouvant former un polymère sur cette surface (b) une substance formant un agent dopant pouvant être incorporée dans ce polymère, (c) un électrolyte-support et (d) un solvant, on soumet ce mélange à une électrolyse en utilisant comme cathode ou comme anode la surface conductrice à revêtir et on polarise cette cathode ou anode à un potentiel situé dans la zone correspondant au transfert électronique entre la surface métallique et le monomère mais respectivement moins négatif ou moins positif que la réaction du solvant, pour autant que le monomère ne soit pas le solvant, ou de l'électrolyte support dans le cas où la surface susdite est utilisée comme cathode ou comme anode, caractérisé en ce que l'on forme à partir du mélange précité, avant l'électrolyse, une solution dans laquelle la substance susdite est présente soit à l'état d'anion, de cation, de molécule, de préférence de molécule organique, et/ou de complexe non dissocié en ions.

2. Procédé suivant la revendication 1, caractérisé en ce que l'on fait usage d'un solvant aprotique.

3. Procédé suivant la revendication 1, caractérisé en ce que l'on fait usage d'un monomère faisant lui-même office de solvant et capable d'assurer la solubilité de l'électrolyte-support.

4. Procédé suivant l'une quelconque des revendications 1 à 3, caractérisé en ce que l'on utilise un électrolyte-support soluble dans le solvant choisi formant un bain de conductivité au moins égale à $10^{-4}\Omega^{-1}cm^{-1}$.

5. Procédé suivant l'une quelconque des revendications 1 à 4, caractérisé en ce que l'on utilise un électrolyte-support contenant essentiellement un sel d'ammonium quaternaire soluble dans le solvant choisi.

6. Procédé suivant la revendication 5, caractérisé en ce que l'on utilise un sel d'ammonium quaternaire choisi dans le groupe formé par : $Et_4NClO_4$, $Bu_4NClO_4$, $Bu_4NPF_6$, $Et_4NBF_4$ et $Et_4NOTos$.

7. Procédé suivant l'une quelconque des revendications 1 à 6, caractérisé en ce que l'on maintient la concentration de l'électrolyte-support entre $10^{-3}$ et 5 M.

**8.** Procédé suivant l'une quelconque des revendications 1, 2, 4 à 7, caractérisé en ce que l'on maintient la concentration du monomère entre $10^{-2}$ M et 10 M.

**9.** Procédé suivant la revendication 8, caractérisé en ce que, lorsque le mélange précité contient un solvant différent du monomère, la concentration de ce dernier est maintenue entre 5 . $10^{-2}$ M et 2 M.

**10.** Procédé suivant l'une quelconque des revendications 1 à 9, caractérisé en ce que l'on utilise un monomère du type vinylique et/ou cyclique.

**11.** Procédé suivant l'une quelconque des revendications 1 à 10, caractérisé en ce que l'on utilise comme agent dopant une substance présentant un potentiel de transfert électronique entre deux états de valence qui soit situé dans la zone correspondant au transfert électronique entre le monomère et l'électrode mais respectivement moins négatif ou moins positif que la réaction du solvant, pour autant que le monomère ne soit pas le solvant, ou de l'électrolyte-support dans le cas où la surface précitée est utilisée comme cathode ou comme anode.

**12.** Procédé suivant la revendication 11, caractérisé en ce que l'on fait usage d'un agent dopant, comme du ferrocène, pouvant subir un transfert électronique dans la zone du potentiel précité tel que la structure chimique reste identique.

**13.** Procédé suivant la revendication 11, caractérisé en ce que l'on fait usage d'un agent dopant, tel qu'une amide ou une quinone, subissant une modification de sa structure chimique après le transfert électronique.

**14.** Procédé suivant l'une quelconque des revendications 1 à 13, caractérisé en ce que l'on fait usage d'un agent dopant choisi dans le groupe de composés inorganiques formé par $TiCl_4$, $CuBr_2$, $Fe(Ac)_2$, $NiBr_2(P\phi_3)_2$, $AgNO_3$, $AlCl_3$, $FeCl_3$, $MoCl_3$, $MoCl_5$, $MnBr_2$, $CrCl_3$, $WCl_6$, $VCl_3$.

**15.** Procédé suivant l'une quelconque des revendications 1 à 13, caractérisé en ce que l'on fait usage d'un agent dopant choisi dans le groupe de composés organiques formé par du quinone, de l'amide, du naphtalène, du phénantrène.

**16.** Procédé suivant l'une quelconque des revendications 1 à 13, caractérisé en ce que l'on fait usage d'un agent dopant radioactif, tel que $Cs_2UCl_6$, $CsUO_2Cl_4$, $Cs_2NpCl_6$, $Cs_2PuCl_6$, permettant la préparation de source mince étalon.

**17.** Procédé suivant l'une quelconque des revendications 1 à 16, caractérisé en ce que l'on maintient la concentration de l'agent dopant inférieur à celle du monomère.

**18.** Procédé suivant l'une qulconque des revendications 1 à 17, caractérisé en ce que l'on maintient la concentration de l'agent dopant entre $10^{-7}$ M et 5 M, et de préférence entre $10^{-6}$ M et $10^{-1}$ M.

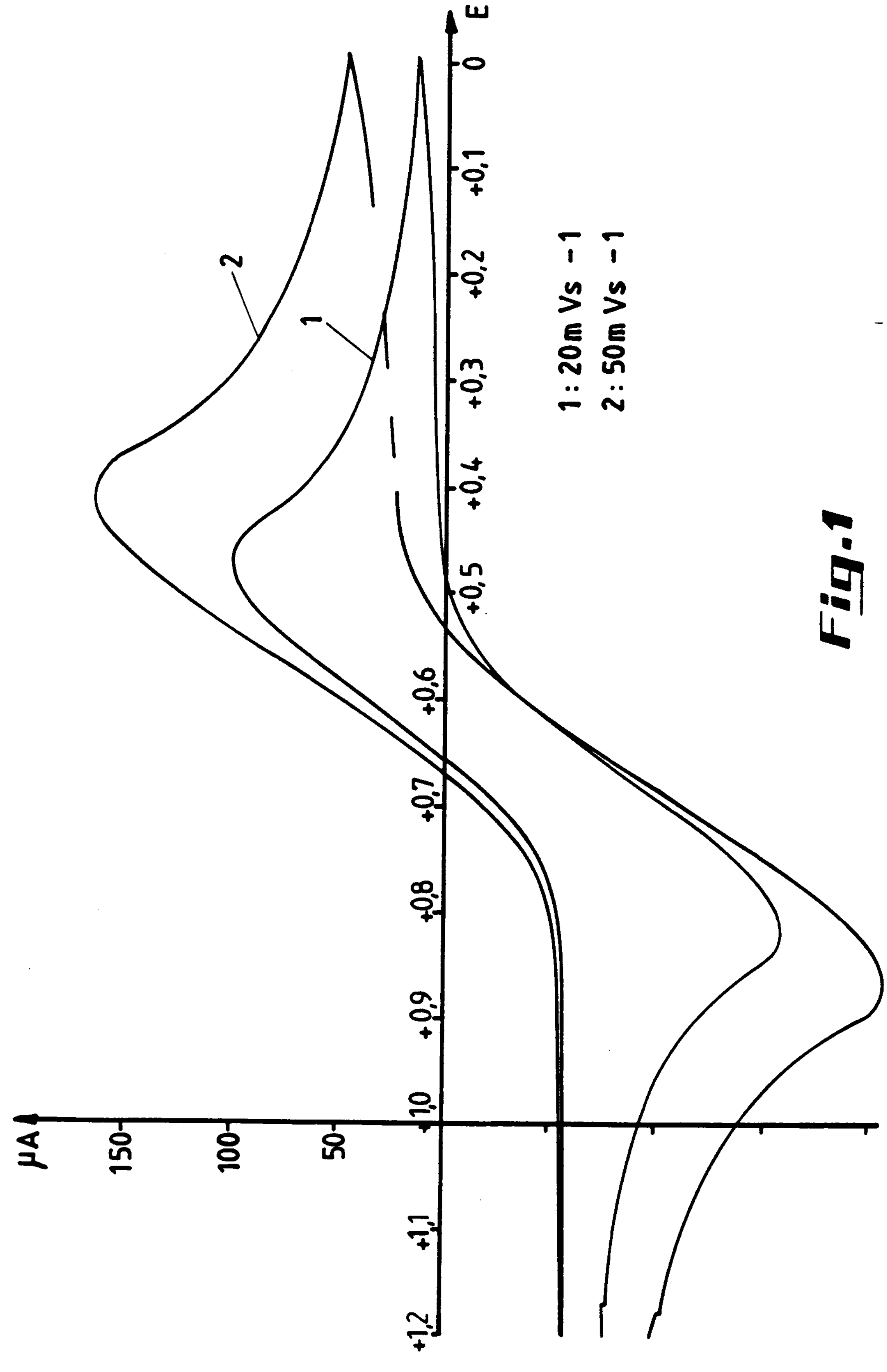
μA
150
100
50
E
0
+0,1
+0,2
+0,3
+0,4
+0,5
+0,6
+0,7
+0,8
+0,9
+1,0
+1,1
+1,2
1
2
1 : 20m Vs −1
2 : 50m Vs −1

Fig.1

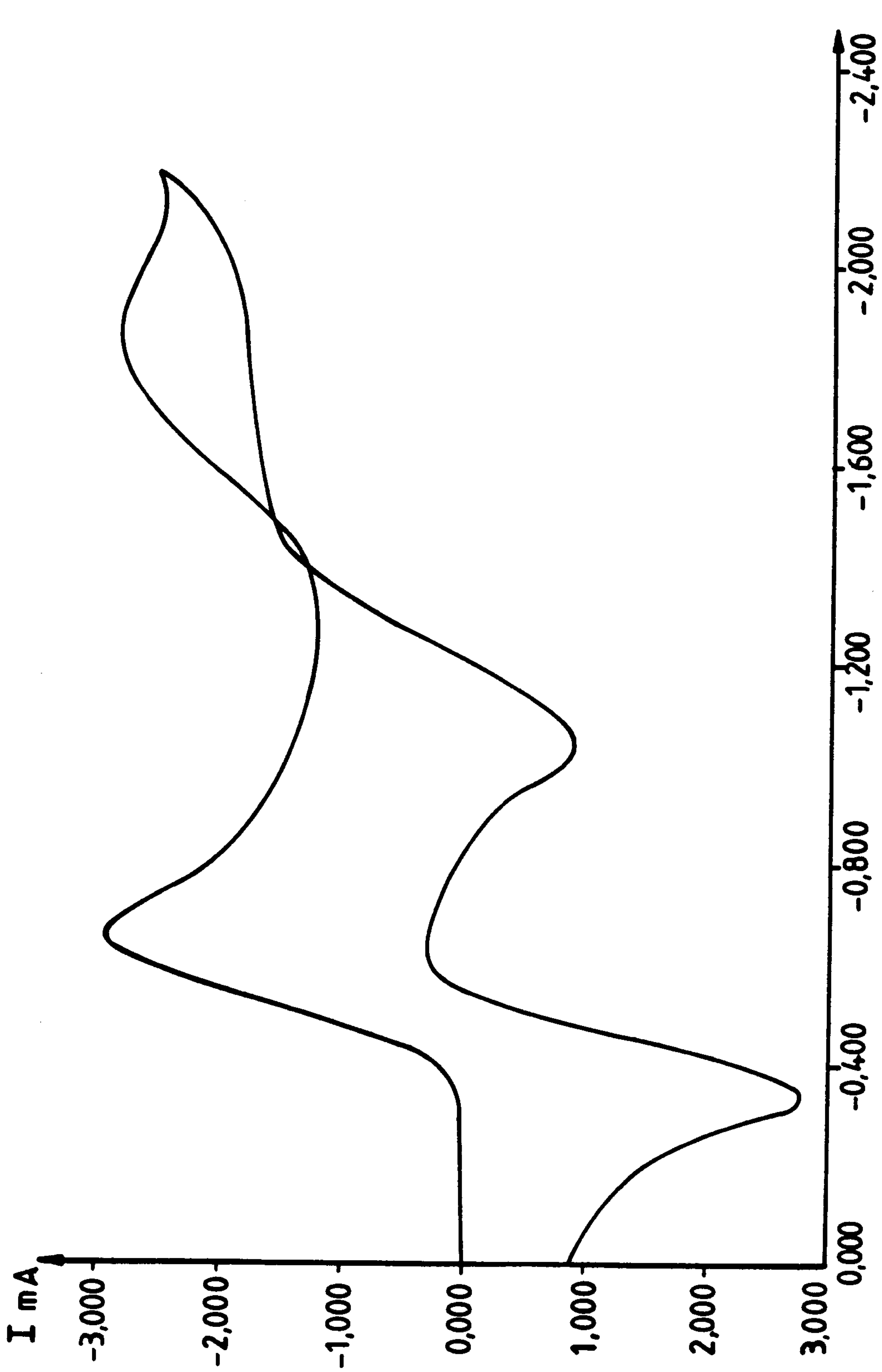
I mA
-3,000
-2,000
-1,000
0,000
1,000
2,000
3,000
E
0,000
-0,400
-0,800
-1,200
-1,600
-2,000
-2,400

Fig.2

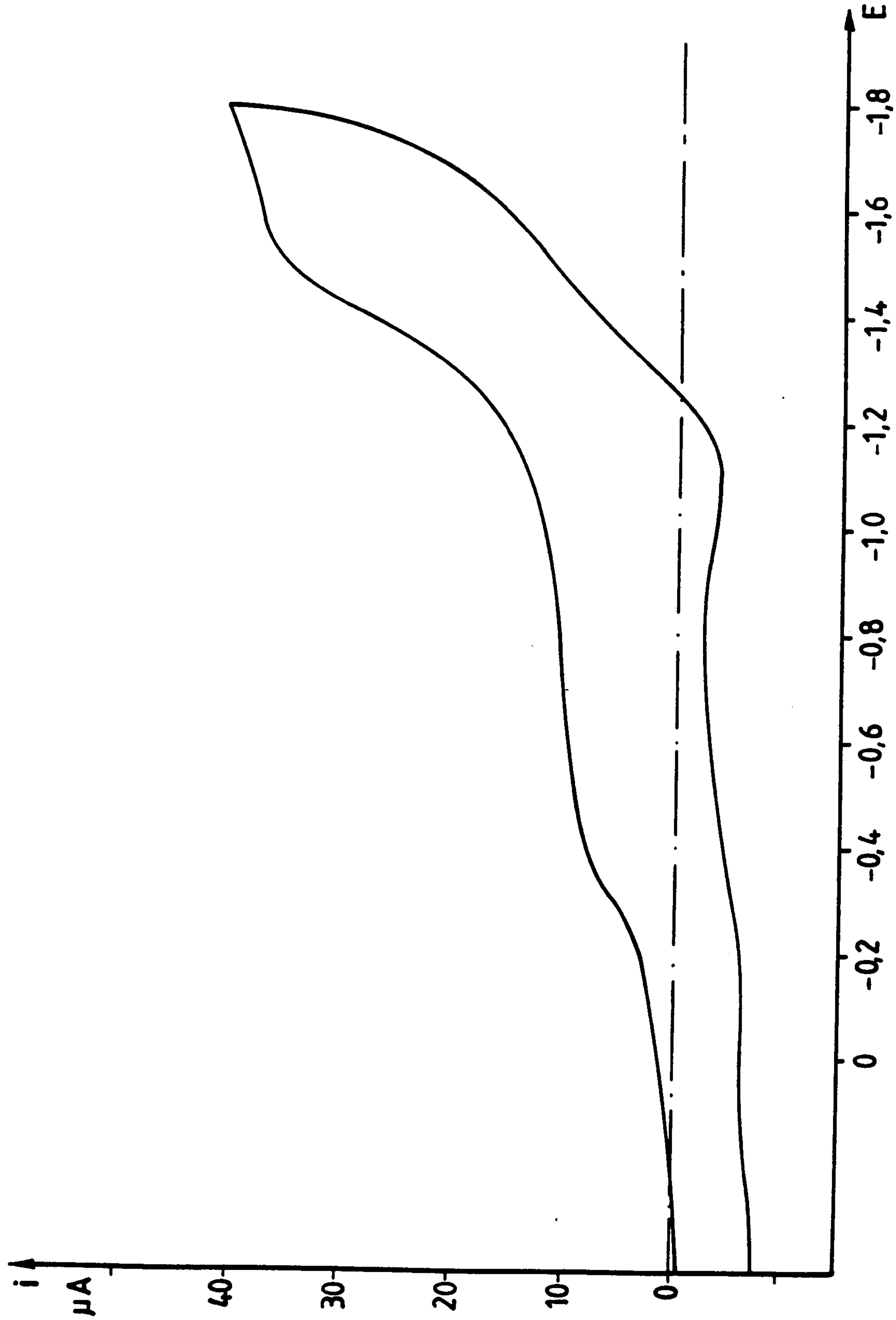


Fig.3

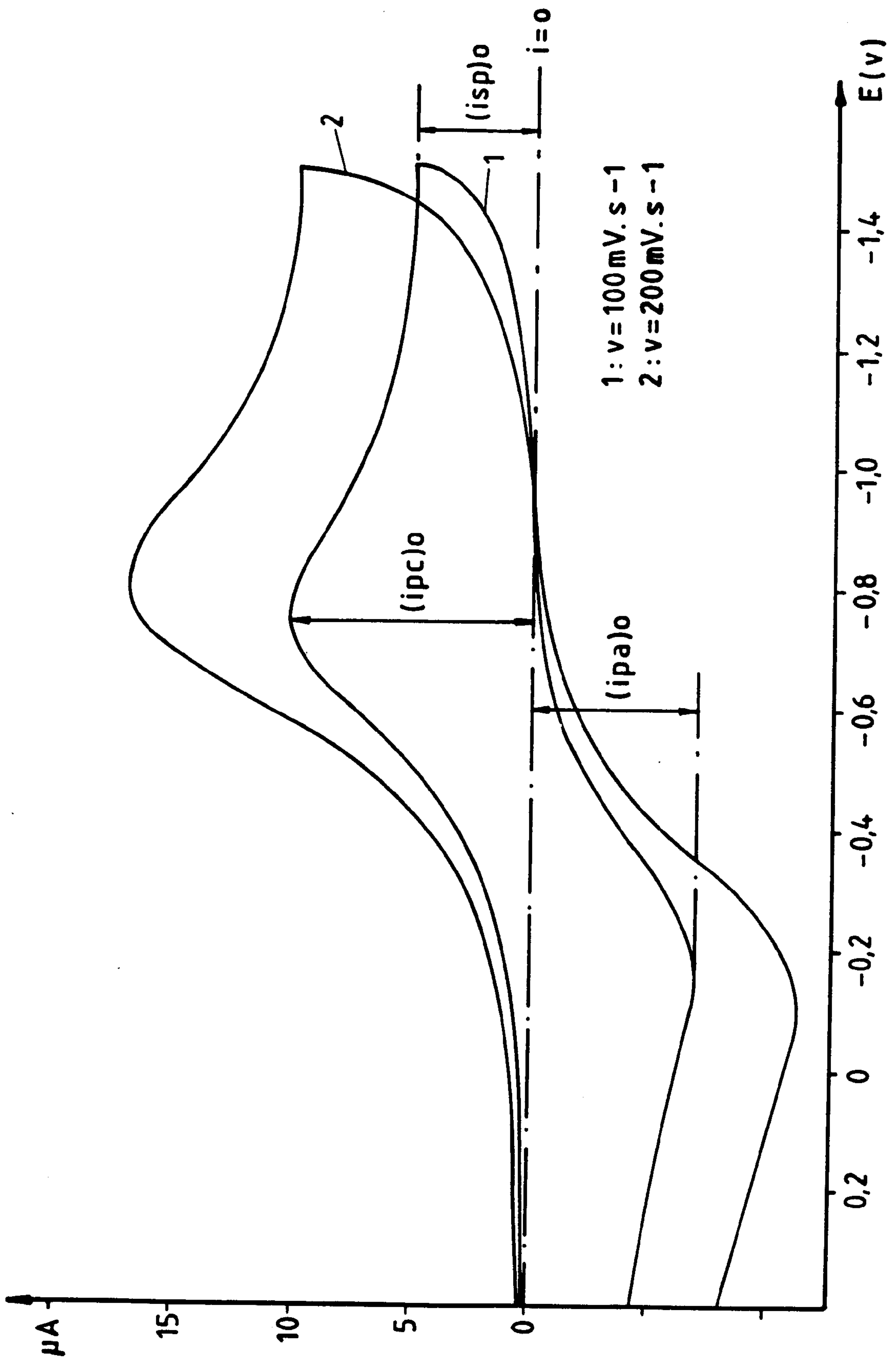
µA
15
10
5
0
E(v)
0,2
0
-0,2
-0,4
-0,6
-0,8
-1,0
-1,2
-1,4
(isp)o
i=o
(ipc)o
(ipa)o
1
2
1: v=100mV.s-1
2: v=200mV.s-1

Fig. 4

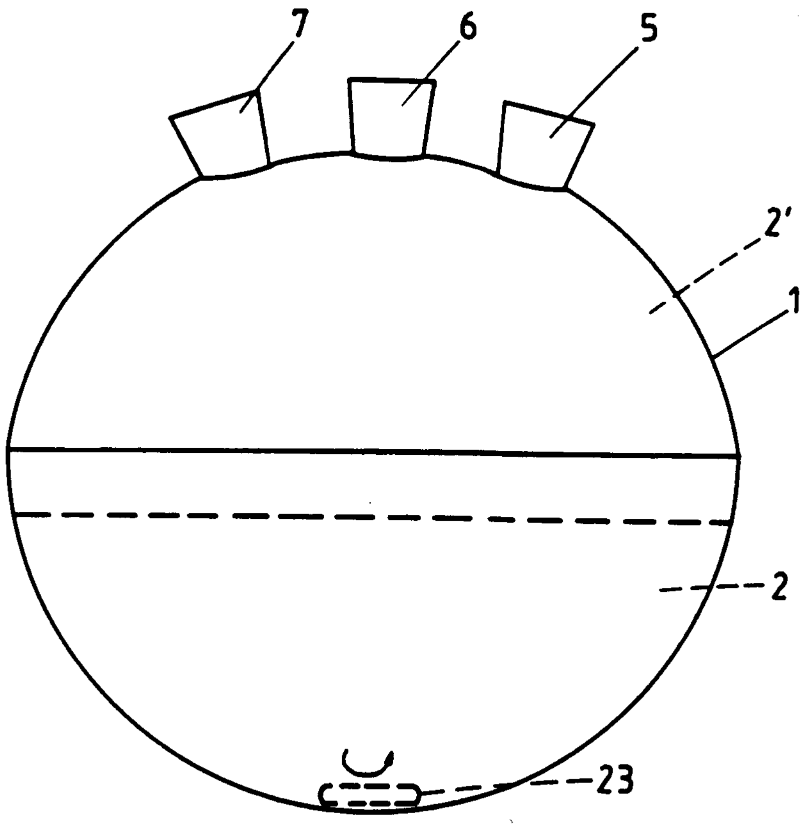


Fig.5

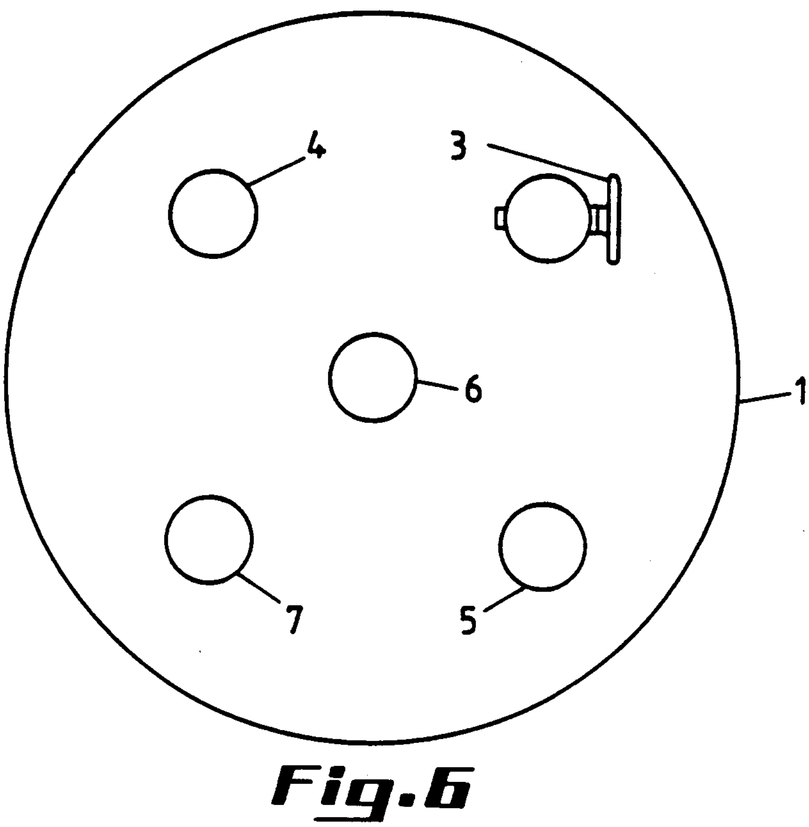


Fig.6

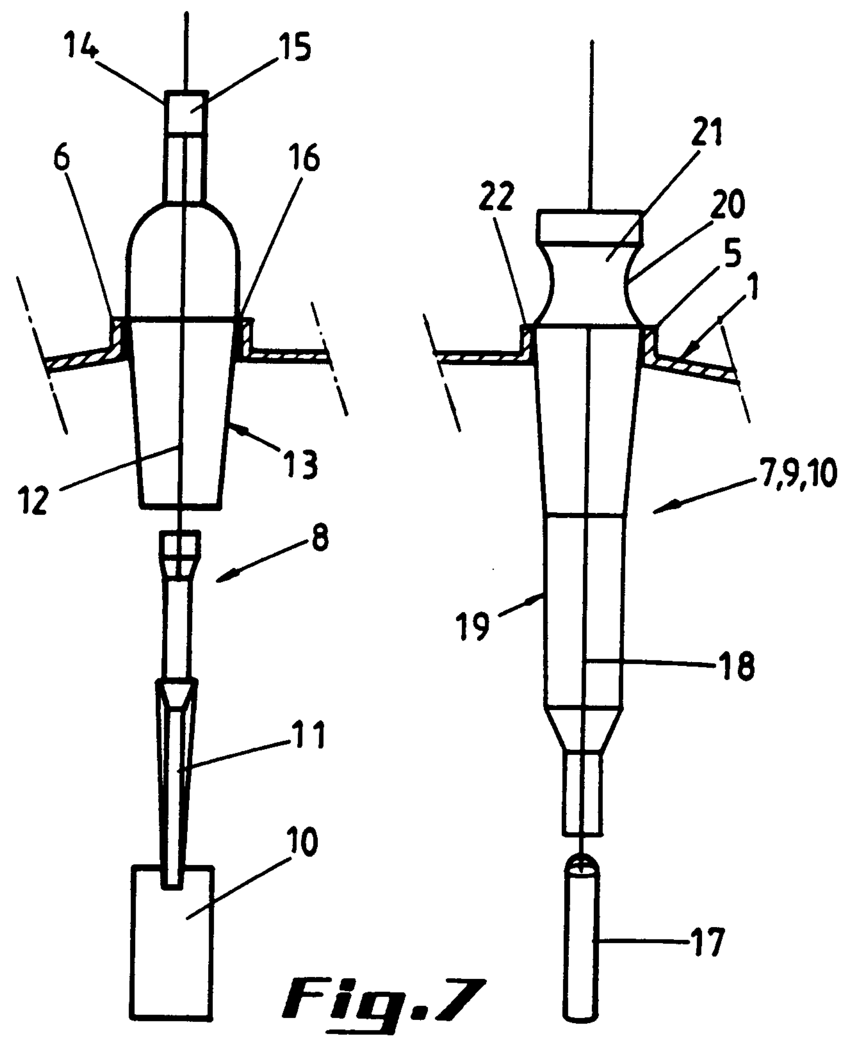


Fig.7

Office européen des brevets

# RAPPORT DE RECHERCHE EUROPEENNE

Numero de la demande
EP 94 87 0056

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| X | EP-A-0 323 351 (COMMISSARIAT A L' ENERGIE ATOMIQUE)<br>* colonne 4, ligne 23 - ligne 51 *<br>--- | 1,2 | C09D4/00<br>C09D5/44<br>C25D13/08<br>H01B1/12 |
| A | EP-A-0 038 244 (COMMISSARIAT A L' ENERGIE ATOMIQUE)<br>* le document en entier *<br>--- | 1 | |
| A | EP-A-0 450 581 (SONY)<br>* colonne 2, ligne 56 - colonne 3, ligne 7 *<br>* exemple 5 *<br>--- | 1 | |
| A | US-A-4 528 118 (MURASE ET AL.)<br>----- | 1,5,6,14 | |

| DOMAINES TECHNIQUES RECHERCHES (Int.Cl.5) |
|---|
| C09D<br>C25D<br>H01B<br>H01M |

Le présent rapport a été établi pour toutes les revendications

| Lieu de la recherche | Date d'achèvement de la recherche | Examinateur |
|---|---|---|
| LA HAYE | 29 Juin 1994 | Andriollo, G |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)